# EUROPEAN PATENT APPLICATION

(11) **EP 4 553 116 A1**
(43) Date of publication of application: **14.05.2025**
(21) Application number: 23208935.9
(22) Date of filing: 09.11.2023
(51) Int. Cl.: C08L 69/00

(54) **POLYCARBONATE/ACRYLONITRILE-STYRENE-ACRYLATE BLENDS WITH EXCEPTIONAL WEATHERABILITY AND GLOSS RETENTION**

(71) Applicant: Covestro LLC, Pittsburgh, PA 15205-9741 (US)
(72) Inventor: Rogunova, Marina, Pittsburgh, 15241 (US); Gorny, Rudy, Oakdale, 15071 (US)
(74) Representative: Levpat

(57) **Abstract**

Provided is a thermoplastic composition comprising: (A) 30 wt.% to 80 wt.%, preferably 30 wt.% to 65 wt.% of an aromatic polycarbonate or an aromatic polyester carbonate; blended with (B) 20 wt.% to 40 wt.%, preferably 25 wt.% to 35 wt.%, of an acrylonitrile-styrene-acrylate (ASA) copolymer; (C) 0 wt.% to 35 wt.%, preferably >0 wt.% to 32 wt.%, of a styrene-acrylonitrile (SAN) copolymer; (D) >0 wt.% to 4 wt.%, preferably 3.5 wt.% to 3.9 wt.% of a dimeric UV absorber; (E) 0.2 wt.% to 0.6 wt.%, preferably 0.2 wt.% to 0.5 wt.% of a mold release agent; and (F) 0.08 wt.% to 0.2 wt.%, preferably 0.1 wt.% to 0.2 wt.%, of an antioxidant, optionally, (G) one or more selected from the group consisting of colorants and fillers, wherein the composition has a Delta E ≤ 3 and a 60° gloss retention ≥ 50% after xenon weathering according to SAE J2527 at 4,500kJ and wherein the wt.%, all instances, are based on the weight of the thermoplastic composition. Plastic parts, particularly automobile parts, produced from the inventive thermoplastic compositions have exceptional weatherability and gloss retention.

## Description

### FIELD OF THE INVENTION

The present invention relates in general to plastics, and more specifically, to polycarbonate/acrylonitrile-styrene-acrylate (PC/ASA) blends with exceptional weatherability and gloss retention.

### BACKGROUND OF THE INVENTION

As those skilled in the art are aware, polycarbonate is not suitable for outdoor applications that are in long-term contact with sunlight as UV light will chemically degrade polycarbonate over time and lead to yellowing. It has been known, since at least the 1980's, that polycarbonate with 7% or more UV absorber can dramatically increase the weatherability of such sheets. By coextruding a thin (50 micrometer) layer of polycarbonate with 7% or more UV absorber on top of a polycarbonate sheet, manufacturers were able to provide 10-year warranties against yellowing. Without the UV cap layer, sheets will have a yellow appearance after very few years. Those skilled in the art also realize that it is not possible to apply such a thin cap layer during the injection molding process which is used to manufacture the vast majority of polycarbonate and polycarbonate blend parts.

Injection molding parts out of polycarbonate with such high UV absorber concentrations leads to products that (1) look yellow, because most commercial UV absorbers are yellow, (2) are brittle, because such high UV absorber concentrations strongly reduce the impact strength, and (3) have a reduced chemical resistance.

Polycarbonate blends with good weatherability are materials of high interest for exterior applications in the automotive industry. A well-known approach in the art to maintain the appearance and mechanical properties of a blend when subjected to a weathering test is the use of impact modifiers that exhibit no free double bonds and are therefore less sensitive to rubber degradation. Commercially available modifiers that can improve weatherability performance of polycarbonate blends are based on ethylene propylene diene monomer rubber (EPDM), acrylonitrile ethylene styrene (AES), silicone or acrylate (ASA) rubbers. However, the weatherability performance of ASA itself and a commercially available PC/ASA blends is insufficient. A number of workers in the art have attempted to remedy this shortcoming with varying degrees of success.

EP 2735589 B1 provides an aromatic polycarbonate resin composition which is said to have an impact resistance improved by blending of an impact strength improver and is further said to have an excellent transparency and a good surface hardness. The aromatic polycarbonate resin composition includes, with respect to 100 parts by mass of a resin component containing 55 to 85 percent by mass of an aromatic polycarbonate resin (A) having a mass average molecular weight of 15,000 to 40,000 and 15 to 45 percent by mass of a (meth)acrylate copolymer (B) which has a mass average molecular weight of 5,000 to 30,000 and which is composed of an aromatic (meth)acrylate unit (b1) and a methyl (meth)acrylate unit (b2) at a mass ratio (b1/b2) of 5 to 50/50 to 95, 1 to 20 parts by mass of an impact strength improver (C).

U.S. Pat. Pub. 2006/069208 discloses compositions comprising: (i) a rubber modified thermoplastic resin comprising a discontinuous elastomeric phase dispersed in a rigid thermoplastic phase, wherein at least a portion of the rigid thermoplastic phase is grafted to the elastomeric phase, and wherein the elastomeric phase comprises a polymer having structural units derived from at least one (C₁-C₁₂)alkyl(meth)acrylate monomer; (ii) a second polymer consisting essentially of structural units derived from at least one (C₁-C₁₂) alkyl(meth)acrylate monomer; and optionally (iii) a third polymer comprising structural units derived from at least one alkenyl aromatic monomer and at least one monoethylenically unsaturated nitrile monomer prepared in a separate polymerization step and added to the composition. In other embodiments the invention comprises articles made from said compositions.

U.S. Pat. No. 8,318,851 describes compositions comprising: (i) 5-45 wt. % of an acrylonitrile-styrene-acrylate (ASA) graft copolymer or acrylate-modified ASA, (ii) 2-82 wt. % of at least one polyestercarbonate which is a block polyestercarbonate comprising organic carbonate blocks alternating with arylate blocks, the arylate blocks comprising ester structural units derived from at least one 1,3-dihydroxybenzene moiety and at least one aromatic dicarboxylic acid, and having a degree of polymerization of at least about 4; and (iii) 5-60 wt. % of at least one rigid thermoplastic polymer comprising structural units derived from styrene and acrylonitrile; α-methylstyrene and acrylonitrile; α-methylstyrene, styrene, and acrylonitrile; styrene, acrylonitrile, and methyl methacrylate; α-methyl styrene, acrylonitrile, and methyl methacrylate; or α-methylstyrene, styrene, acrylonitrile, and methyl methacrylate, or mixtures thereof, wherein wt. % values are based on the weight of components (i)-(iii) and wherein a molded article made from the composition has a notched Izod impact strength of at least 5 kilojoules per square meter (kJ/m²) as determined according to ISO 180 at room temperature and a Vicat B value of at least 101° C. determined at 120° C. according to ISO 306. Articles made from said compositions are also disclosed.

KR 100802752 B1 provides a polycarbonate resin composition which is said to improve low temperature impact strength, heat resistance, electrical properties, moldability, dimension stability and light resistance and to reduce gloss. The polycarbonate resin composition comprises 37-90 wt% of a polycarbonate having a melt index of 5-40 g/10 min (300 °C, 2.16 kg); 1-50 wt% of a mixture comprising styrene-acrylonitrile (SAN) and acrylonitrile-styrene-acrylic (ASA) rubber; 3-7 wt% of a silicone-acrylic rubber impact modifier having a core-shell structure; 3-8 wt% of a matting agent; and 0.1-1.5 wt% of a UV absorber. Preferably, the matting agent is said to be at least one selected from crosslinked styrene-acrylonitrile, ethylene, α-methylstyrene, p-methylstyrene, vinyl toluene, p-t-butylstyrene and chlorostyrene.

CN 111073252 B discloses a high-weather-resistance light-color halogen-free flame-retardant polycarbonate/acrylonitrile-styrene-acrylate (PC/ASA) alloy material. The material is prepared from the following components by weight: 600-800 parts of polycarbonate; 50-250 parts of acrylonitrile-styrene-acrylate; 50-150 parts of a halogen-free flame retardant; 0-50 parts of a toughening agent; 50-200 parts of titanium dioxide; 4-8 parts of a flame-retardant anti-dripping agent; 1-10 parts of an antioxidant; 1-15 parts of a release agent; and 1-20 parts of anti-ultraviolet agent. The mass ratio of the titanium dioxide in the raw materials of the high-weather-resistance light-color halogen-free flame-retardant PC/ASA alloy material is 4.7-17%. The product surface of the high-weather-resistance light-color halogen-free flame-retardant PC/ASA alloy material has a good color retention rate, the color difference is said to be less than 4 after illumination for 1000 hours, and due to the increase of the content of titanium dioxide, the performance of the material and the appearance of the product can be effectively protected.

Thus, a need still exists in the art for polycarbonate/acrylonitrile-styrene-acrylate (PC/ASA) blends with improved weatherability and gloss retention.

### SUMMARY OF THE INVENTION

Accordingly, the present invention reduces or eliminates problems inherent in the art by providing a material made from polycarbonate, acrylonitrile-styrene-acrylate (ASA) and styrene-acrylonitrile (SAN) in combination with elevated concentrations of a dimeric UV absorber, and a standard additive package which are blended to increase the weatherability performance of polycarbonate/acrylonitrile-styrene-acrylate (PC/ASA) and polycarbonate/acrylonitrile-styrene-acrylate/styrene-acrylonitrile (PC/ASA/SAN) materials.

Surprisingly, the present inventors have found a synergistic combination of polycarbonate/acrylonitrile-styrene-acrylate (PC/ASA) and one of polycarbonate/acrylonitrile-styrene-acrylate/styrene-acrylonitrile (PC/ASA/SAN) that provides a significantly improved weatherability performance of Delta E ≤ 3 and gloss retention ≥ 50% after 4,500kJ and gloss retention together with good impact and flow properties.

It is understood that the invention disclosed and described in this specification is not limited to the embodiments summarized in this Summary.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In a first embodiment, the present invention is directed to a thermoplastic composition comprising: (A) 30 wt.% to 80 wt.%, preferably 30 wt.% to 65 wt.% of an aromatic polycarbonate or an aromatic polyester carbonate; blended with (B) 20 wt.% to 40 wt.%, preferably 25 wt.% to 35 wt.%, of an acrylonitrile-styrene-acrylate (ASA) copolymer; (C) 0 wt.% to 35 wt.%, preferably >0 wt.% to 32 wt.%, of a styrene-acrylonitrile (SAN) copolymer; (D) >0 wt.% to 4 wt.%, preferably 3.5 wt.% to 3.9 wt.% of a dimeric UV absorber; (E) 0.2 wt.% to 0.6 wt.%, preferably 0.2 wt.% to 0.5 wt.% of a mold release agent; and (F) 0.08 wt.% to 0.2 wt.%, preferably 0.1 wt.% to 0.2 wt.%, of an antioxidant, optionally, (G) one or more selected from the group consisting of colorants and fillers, wherein the thermoplastic composition has a Delta E ≤ 3 and a 60° gloss retention ≥ 50% after xenon weathering according to SAE J2527 at 4,500kJ and wherein the wt.%, all instances, are based on the weight of the thermoplastic composition.

In a second embodiment, the present invention is directed to a process of producing the thermoplastic composition according to Clause 1, the process comprising blending: (A) 30 wt.% to 80 wt.%, preferably 30 wt.% to 65 wt.% of an aromatic polycarbonate or an aromatic polyester carbonate, with (B) 20 wt.% to 40 wt.%, preferably 25 wt.% to 35 wt.% of an acrylonitrile-styrene-acrylate (ASA) copolymer, (C) 0 wt.% to 35 wt.%, preferably >0 wt.% to 32 wt.% of a styrene-acrylonitrile (SAN) copolymer, (D) >0 wt.% to 4 wt.%, preferably 3.5 wt.% to 3.9 wt.% of a dimeric UV absorber, (E) 0.2 wt.% to 0.6 wt.%, preferably 0.2 wt.% to 0.5 wt.% of a mold release agent, (F) 0.08 wt.% to 0.2 wt.%, preferably 0.1 wt.% to 0.2 wt.%, of an antioxidant, optionally, one or more selected from the group consisting of colorants, fillers, to produce a composition having a Delta E ≤ 3 and a 60° gloss retention ≥ 50% after xenon weathering according to SAE J2527 at 4,500kJ and wherein the wt.%, all instances, are based on the weight of the thermoplastic composition.

In a third embodiment, the present invention is directed to a plastic part comprising the thermoplastic composition according one of the two previous paragraphs.

In a fourth embodiment, the present invention is directed to an automobile part comprising the plastic part according to the previous paragraph.

### Component A

Aromatic polycarbonates and/or aromatic polyester carbonates suitable for use as component A are known in the literature or can be prepared by methods in the literature (for the preparation of aromatic polycarbonates see, for example, Schnell, "Chemistry and Physics of Polycarbonates", Interscience Publishers, 1964 and U.S. Pat. No. 3,553,167, DE-A 2,232,877, U.S. Pat. No. 4,075,173, GB1552558, U.S. Pat. No. 4,311,823, DE-A 3,832,396; for the preparation of aromatic polyester carbonates, e.g., CA1173998). The preparation of aromatic polycarbonates is conducted, for example, by reacting diphenols with carbonic acid halides, preferably phosgene and/or with aromatic dicarboxylic acid dihalides, preferably benzenedicarboxylic acid dihalides, by the phase boundary method, optionally using chain terminators, for example monophenols and optionally using trifunctional or more than trifunctional branches, for example triphenols or tetraphenols. Likewise, a preparation via a melt polymerization process by reaction of diphenols with, for example, diphenyl carbonate is possible.

Diphenols for the preparation of the aromatic polycarbonates and / or aromatic polyester carbonates are preferably those of formula (I) 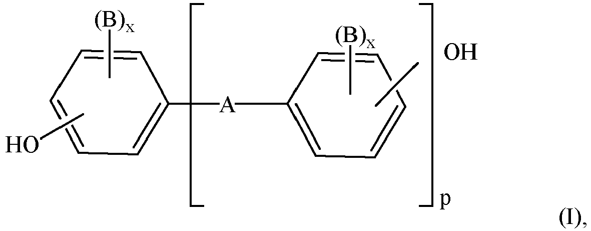 wherein
A is a single bond, C₁ - C₅-alkylene, C₂ - Cs-alkylidene, C₅ - C₆-cycloalkylidene, -O-, -SO-, -CO-, -S-, -SO₂-, C₆ - C₁₂ arylene, to which further aromatic optionally heteroatom-containing rings may be condensed,
   or a remainder of formula (II) or (III) 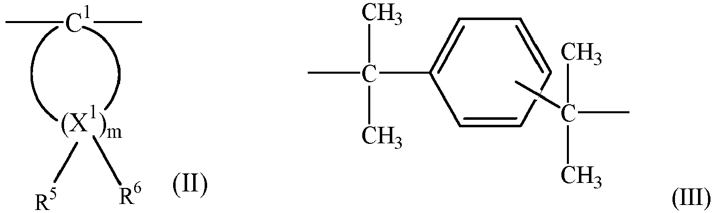
B in each case is C₁ - C₁₂ alkyl, preferably methyl, halogen, preferably chlorine and /or bromine
x independently is 0, 1 or 2,
p is 1 or 0, and
R⁵ and R⁶ for each X¹ is independently hydrogen or C₁ - C₆-alkyl, preferably hydrogen, methyl or ethyl,
X^{I} is carbon and
m is an integer from 4 to 7, preferably 4 or 5, with the proviso that at least one atom X¹, R⁵, and R⁶ is alkyl.

Preferred diphenols are hydroquinone, resorcinol, dihydroxydiphenols, bis (hydroxyphenyl-C₁ - C₆-alkanes, bis (hydroxyphenyl)-C₅ - C₆-cycloalkanes, bis (hydroxyphenyl) ether, bis (hydroxyphenyl) sulfoxides, bis (hydroxyphenyl) ketones, bis (hydroxyphenyl) sulfones and α,α-bis (hydroxyphenyl) diisopropylbenzenes and ring-brominated and/or ring-chlorinated derivatives thereof.

Particularly preferred diphenols are 4,4'-dihydroxydiphenyl, bisphenol-A, 2,4-bis (4-hydroxyphenyl)-2-methylbutane, 1,1-bis (4-hydroxyphenyl) cyclohexane, 1,1-bis (4-hydroxyphenyl) -3.3,5-trimethylcyclohexane, 4,4'-dihydroxydiphenyl sulfide, 4,4'-dihydroxydiphenyl sulfone and di- and tetrabrominated or chlorinated derivatives thereof, such as 2,2-bis (3-chloro-4-hydroxyphenyl) propane, 2,2-bis (3,5-dichloro-4-hydroxyphenyl)-propane or 2,2-bis-(3,5-dibromo-4-hydroxyphenyl)-propane. Particularly preferred is 2,2-bis (4-hydroxyphenyl) propane (bisphenol-A).

The diphenols can be used individually or as a mixture. The diphenols are known in the literature or available by methods known in the literature.

For the preparation of thermoplastic, aromatic polycarbonates, suitable chain terminators are, for example, phenol, p-chlorophenol, p-tert-butylphenol or 2,4,6-tribromophenol, but also long-chain alkylphenols such as 4-[2-(2,4,4-trimethylpentyl)]-phenol, 4-(1, 3-tetramethylbutyl) phenol according to U.S. Pat. No. 4,269,964 or monoalkylphenol or dialkylphenols having a total of 8 to 20 carbon atoms in the alkyl substituents, such as 3,5-di-tert-butylphenol, p-iso-octylphenol, p-tert-octylphenol, p-dodecylphenol and 2-(3,5-dimethylheptyl) phenol and 4-(3,5-dimethylheptyl) phenol. The amount of chain terminators to be used is preferably between 0.5 mol% and 10 mol%, based on the molar sum of the diphenols used.

The thermoplastic, aromatic polycarbonates have average molecular weights (weight average M_{w}, measured by GPC (gel permeation chromatography) with polycarbonate standard based on bisphenol A) of preferably 20,000 to 40,000 g/mol, more preferably 24,000 to 32,000 g/mol, more preferably 26,000 to 30,000 g/mol. By the preferred areas is achieved in the inventive compositions a particularly advantageous balance of mechanical and rheological properties.

The thermoplastic, aromatic polycarbonates may be branched in a known manner, preferably by the incorporation of 0.05 to 2.0 mol%, based on the sum of the diphenols used, on three-fictional or more than three-factor compounds, for example those having three and more phenolic groups. Linear polycarbonates, more preferably based on bisphenol A, are preferably used.

Both homopolycarbonates and copolycarbonates are suitable. For the preparation of inventive copolycarbonates according to component A, 1 to 25 wt.%, preferably 2.5 to 25 wt.%, Based on the total amount of diphenols to be used, polydiorganosiloxanes having hydroxyaryloxy end groups can be used. These are known (U.S. Pat. No. 3,419,634) and can be prepared by methods known in the literature. Also suitable are polydiorganosiloxane-containing copolycarbonates; the preparation of such materials is described, for example, in U.S. Pat. No. 4,584,360.

Compounds useful for the preparation of aromatic polyester carbonates are preferably the diacid dichlorides of isophthalic acid, terephthalic acid, diphenyl ether-4,4'-dicarboxylic acid and naphthalene-2,6-dicarboxylic acid.

Particularly preferred are mixtures of the diacid dichlorides of isophthalic acid and terephthalic acid in the ratio between 1:20 and 20:1.

In the preparation of polyester carbonates, a carbonic acid halide, preferably phosgene, is additionally used as a bifunctional acid derivative.

As chain terminators for the preparation of the aromatic polyester carbonates, in addition to the monophenols already mentioned, their chlorinated carbon dioxide esters and the acid chlorides of aromatic monocarboxylic acids, which may optionally be substituted by C₁ - C₂₂ alkyl groups or by halogen atoms, and aliphatic C₂ - C₂₂ monocarboxylic acid chlorides into consideration.

The amount of chain terminators is in each case 0.1 to 10 mol%, based in the case of phenolic chain terminators on mole diphenol and in the case of monocarboxylic acid chloride chain terminators on moles of dicarboxylic acid dichloride.

In the preparation of aromatic polyester carbonates, one or more aromatic hydroxycarboxylic acids can also be used.

Aromatic polyester carbonates may be branched both linearly and in a known manner (see U.S. Pat. No. 4,334,053and CA 1173998), wherein linear polyester carbonates are preferred. Suitable branching agents can, for example, three- or multifunctional carboxylic acid chlorides such as trimesic acid trichloride, cyanuric acid trichloride, 3,3'-, 4,4'-benzophenone-tetracarboxylic acid tetrachloride, 1,4,5,8-napthalenetetracarboxylic acid tetrachloride or pyromellitic acid tetrachloride, in amounts of 0.01 to 1.0 mol% (based on dicarboxylic acid dichlorides used) or three- or multifunctional phenols such as phloroglucinol, 4,6-dimethyl-2,4,6-tri-(4-hydroxyphenyl)-hept-2-ene, 4,6-dimethyl-2,4-6-tri-(4-hydroxyphenyl) heptane, 1,3,5-tri-(4-hydroxyphenyl) benzene, 1,1,1-tri-(4-hydroxyphenyl) ethane, tri-(4-hydroxyphenyl-phenylmethane, 2,2-bis [4,4-bis (4-hydroxyphenyl)-cyclohexyl]-propane, 2,4-bis (4-hydroxyphenyl-isopropyl) phenol, tetra-(4-hydroxyphenyl)-methane, 2,6-bis (2-hydroxy-5-methyl-benzyl)-4-methyl-phenol, 2-(4-hydroxyphenyl)-2-(2,4-dihydroxyphenyl)-propane, tetra-(4-[4-hydroxyphenyl-isopropyl]-phenoxy)-methane, 1,4-bis [4,4'-dihydroxytri-phenyl)-methyl] benzene, in amounts of 0.01 to 1.0 mol% based on diphenols used. Phenolic branching agents can be used with the diphenols; acid chloride branching agents can be used together with the acid dichlorides.

In the thermoplastic, aromatic polyester carbonates, the proportion of carbonate structural units can vary arbitrarily. Preferably, the proportion of carbonate groups is up to 100 mol%, in particular up to 80 mol%, particularly preferably up to 50 mol%, based on the sum of ester groups and carbonate groups. Both the ester and the carbonate content of the aromatic polyester carbonates can be in the form of blocks or statistically distributed in the polycondensate.

The thermoplastic, aromatic polycarbonates and polyester carbonates can be used alone or in any mixture. Linear polycarbonate based exclusively on bisphenol A is preferably used as component A.

The compositions of the present invention may contain 30 wt.% to 80 wt.%, preferably 30 wt.% to 65 wt.% of an aromatic polycarbonate and/or aromatic polyester carbonate. The aromatic polycarbonate and/or aromatic polyester carbonate may be present in the composition of the present invention in an amount ranging between any combination of these values, inclusive of the recited values.

### Component B

Acrylonitrile-styrene-acrylate copolymer (ASA), which comprises a styrene-acrylonitrile (SAN) matrix having an acrylate elastomer phase dispersed within the SAN. The ASA terpolymer can be a homogeneous blend of polymers and/or an interpolymer, i.e., a polymer composition having a plurality of phases, wherein the polymer phases have graft linkages and/or interpenetration of polymer chains of a first phase into a second phase. The interpenetrating chains can form a network within the phase into which they penetrate. Acrylonitrile-styrene-acrylate copolymers also desirably have an outer continuous phase of acrylonitrile-styrene copolymer, which is suitable for good blending properties with polycarbonate.

Acrylonitrile-styrene-acrylate copolymers can comprise a phase comprising a crosslinked acrylate elastomer, a phase comprising a crosslinked styrene-acrylonitrile copolymer, and a phase comprising a linear styrene acrylonitrile copolymer. As used in the context of the present invention, "styrene" can include methyl substituted styrene such as, α-methylstyrene, vinyl toluene, and combinations thereof.

Specific acrylonitrile-styrene-acrylate copolymers include core-shell-type impact modifiers in a styrene-acrylonitrile (SAN) matrix. The acrylate elastomer core portion of these resins may be composed of alkyl, aryl, or aryl-alkyl (also referred to as aralkyl) esters of acrylic or methacrylic acids. Specifically, acrylates include esterified products of C₁ - C₃₀-substituted alkyl, C₃ - C₃₀ -substituted cycloalkyl, C₆ - C₃₀-substituted aryl, and C₇ - C₃₀-substituted aralkyl alcohols.

Suitable acrylate monomers include, but are not limited to, methyl acrylate, ethyl acrylate, 1-propyl acrylate, 2-propyl acrylate, n-butyl acrylate, 2-butyl acrylate, 2-methylpropyl acrylate, t-butyl acrylate, n-pentyl acrylate, 2-pentyl acrylate, 3-pentyl acrylate, 2,2-dimethylpropyl acrylate, n-hexyl acrylate, cyclohexyl methacrylate, methyl cyclohexyl acrylate, heptyl acrylates, octyl acrylates, decyl acrylates, phenyl acrylate, benzyl acrylate, hydroxyethyl acrylate, 2-hydroxypropyl acrylate, and combinations thereof.

Methacrylate monomers may also be used, including but not limited to, methyl methacrylate, ethyl methacrylate, 1-propyl methacrylate, 2-propyl methacrylate, n-butyl methacrylate, 2-butyl methacrylate, 2-methylpropyl methacrylate, t-butyl methacrylate, n-pentyl methacrylate, 2-pentyl methacrylate, 3-pentyl methacrylate, 2,2-dimethylpropyl methacrylate, n-hexyl methacrylate, cyclohexyl methacrylate, methyl cyclohexyl methacrylate, heptyl methacrylates, octyl methacrylates, decyl methacrylates, phenyl methacrylate, benzyl methacrylate, hydroxyethyl methacrylate, 2-hydroxypropyl methacrylate.

Specific nitrile monomers include acrylonitrile, methacrylonitrile, fumaronitrile, a combination comprising one or more of these. Suitable vinyl aromatic monomers include, but are not limited to, styrene, α-methyl styrene, vinyl toluene, chloromethyl styrene, chlorostyrene, bromostyrene, acetoxystyrene, methoxystyrene, and combinations thereof.

Such acrylonitrile-styrene-acrylate polymers can be prepared by solution phase polymerization, emulsion polymerization suspension polymerization, a combination comprising at least one of these methods. The core shell portion of the resin may be prepared by a process wherein the acrylate elastomer core is polymerized, and a thermoplastic shell is grafted to the core. Specific examples of a thermoplastic shell include polymethyl methacrylate, polystyrene, styrene-acrylonitrile copolymer, and other similar vinyl polymers or copolymers. The acrylate or methacrylate elastomer core may be crosslinked with polyfunctional vinyl compounds including, but not limited to, divinyl benzene, 1,5-hexadiene, 1,7-octadiene, diethyleneglycol diacrylate, propylene glycol diacrylate, propylene glycol dimethacrylate.

Acrylonitrile-styrene-acrylate (ASA) copolymers suitable for use as component B are known in the literature and are available from a variety of suppliers, such as Formosa Chemicals (GELOV), Chi Mei Corporation (KIBII,AC), and Sabic (LURAN).

The compositions of the present invention may contain 20 wt.% to 40 wt.%, preferably 25 wt.% to 35 wt.% of acrylonitrile-styrene-acrylate (ASA) copolymer, based on the weight of the composition. The acrylonitrile-styrene-acrylate (ASA) copolymer may be present in the composition of the present invention in an amount ranging between any combination of these values, inclusive of the recited values.

### Component C

In the present invention, styrene-acrylonitrile copolymer is referred to as SAN resin. The proportion of acrylonitrile is 5% to 50% by weight, preferably 15% to 35% by weight, the proportion of styrene is 95% to 50% by weight, preferably 85% to 65% by weight, based on 100% by weight of the overall styrene-acrylonitrile copolymer.

The styrene-acrylonitrile copolymer can be prepared by any processes such as bulk polymerization, solution polymerization, suspension polymerization and emulsion polymerization, preferably bulk polymerization or suspension polymerization. Further, copolymerization process can be one-step copolymerization or multi-step copolymerization. The styrene-acrylonitrile copolymer useful in the present invention has a weight average molecular weight of 40,000-200,000 g/mol, preferably 50,000-160,000 g/mol, more preferably 70,000-150,000 g/mol, measured by gel permeation chromatography (GPC).

Styrene-acrylonitrile (SAN) copolymers suitable for use as component C are known in the literature or can be prepared by methods in the literature and are commercially available from a variety of suppliers, such as INEOS (LUSTRAN).

The compositions of the present invention may contain 0 wt.% to 35 wt.%, preferably >0 wt.% to 32 wt.% of styrene-acrylonitrile copolymer, based on the weight of the composition. The styrene-acrylonitrile copolymer may be present in the composition of the present invention in an amount ranging between any combination of these values, inclusive of the recited values.

### Component D

Dimeric UV absorbers suitable for use as component D are known in the literature and are commercially available from a variety of suppliers. Examples of suitable dimeric UV absorbers include the following: hydroxybenzotriazoles, such as 2-(3',5'-bis(1,1-dimethylbenzyl)-2'-hydroxyphenyl)benzotriazole (TINUVIN 234, BASF SE), 2-(2'-hydroxy-5'-(tert-octyl)phenyl)benzotriazole (TINUVIN 329, BASF SE), 2-(2'-hydroxy-3'-(2-butyl)-5'-(tert-butyl)phenyl)benzotriazole (TINUVIN 350, BASF SE), bis(3-(2H-benzotriazolyl)-2-hydroxy-5-tert-octyl)methane, (TINUVIN 360, BASF SE), (2-(4,6-diphenyl-1,3,5-triazin-2-yl)-5-(hexyloxy)phenol (TINUVIN 1577, BASF SE), the benzophenones, such as 2,4-dihydroxybenzophenone (CHIMASORB 22, BASF SE) or 2-hydroxy-4-(octyloxy)benzophenone (CHIMASORB 81, BASF SE), cyano-3,3-diphenyl-2-propenoic acid, 2,2-bis[[(2-cyano-1-oxo-3,3-diphenyl-2-propenyl)oxy]methyl]-1,3-propanediyl ester (UVINUL 3030, BASF SE), 2-[2-hydroxy-4-(2-ethylhexyl)oxy]phenyl-4,6-di(4-phenyl)phenyl-1,3,5-triazine (CGX UVA 006, BASF SE), 2-(5-chloro-2H-benzotriazol-2-yl)-6-(1,1-dimethylethyl)-4-methylphenol (TINUVIN 326) or tetraethyl 2,2'-(1,4-phenylenedimethylidene)bismalonate (HOSTAVIN B-Cap, Clariant AG). It is also possible to use mixtures and combinations of these ultraviolet absorbers.

The compositions of the present invention may contain >0 wt.% to 4 wt.%, preferably 3.5 wt.% to 3.9 wt.% of one or more dimeric ultraviolet absorbers wherein the wt.% are based on the weight of the composition. The dimeric ultraviolet absorbers may be present in the composition of the present invention in an amount ranging between any combination of these values, inclusive of the recited values.

### Component E

Component E is one or more mold release agents, which are mostly derivatives of long-chain fatty acids. Pentaerythritol tetrastearate and glycerol monostearate for example may be used. Such mold release agents are employed on their own or as mixtures and in amounts of 0.2 wt.% to 0.6 wt.%, preferably 0.2 wt.% to 0.5 wt.% based on the weight of the composition.

### Component F

Component F is one or more antioxidants, such as alkylated monophenols, alkylated thioalkylphenols, hydroquinones and alkylated hydroquinones, and used in amounts 0.08 wt.% to 0.2 wt.%, preferably 0.1 wt.% to 0.2 wt.%, based on the weight of the composition. It is preferable to employ IRGANOX 1010 (pentaerythritol-3-(4-hydroxy-3,5-di-tertbutylphenyl)propionate; CAS No.: 6683-19-8) and/or IRGANOX 1076 (2,6-di-tert-butyl-4-(octadecanoxycarbonylethyl)phenol; CAS No.: 2082-79-3).

### Component G

Component G comprises one or more additives selected from the group consisting of colorants, fillers, and polymeric blending partners.

The polymer additives or polymeric blend partners are preferably selected from the group consisting of lubricants and demolding agents, stabilizers, fillers, and reinforcing materials. As lubricants and demolding agents, fatty acid esters, particularly preferably fatty acid esters of pentaerythritol or glycerol, are used in a preferred embodiment.

Optional colorant compositions, useful in the invention are organic and inorganic pigments and dyes, including soluble dyes. In addition, one or more other components, which can be divided into volatile and non-volatile components, may be included. Non-volatile components include binders, fillers and auxiliaries. These are usually only needed in very small quantities but are often indispensable for problem-free processing. The volatile components are essentially liquids in which the colorants and possible other components are dissolved or dispersed. It can be organic, inorganic solvents or mixtures of several solvents. Often the solvent is water or a mixture of water and another solvent. Suitable organic solvents are, for example, ketones, esters, alcohols and aromatic or aliphatic hydrocarbons. It can also be used mixtures of several organic or inorganic solvents.

The non-volatile binders ensure that the colorants are anchored to the substrate so that the finished print resists stresses caused by abrasion, heat and mechanical bending. Suitable binders for the colorants are, for example, nitrocellulose in combination with plasticizers, thermoplastic polyurethanes, thermoplastic polyesters, thermoplastic polycarbonates and thermoplastic poly (meth) acrylates. It is also possible that different binders are combined, as described in DE 198 32 570 A1. It is also possible to form the binder (e.g., a polyurethane or an epoxy resin) during the application of the colorant composition by chemical reaction in situ.

The selection of suitable colorants is practically unrestricted, provided that sufficient temperature resistance is guaranteed. Suitable organic colorants include, for example, colorants from the azo, antharachinone, azoporphine, thioindigo, dioxazine, naphthalenetetracarboxylic acid or perylenetetracarboxylic acid series and phthalocyanine compounds. Suitable inorganic colorants include, for example, iron oxides, ultramarines, zinc sulfides, silicon dioxides, aluminum oxides, titanium oxides, nickel and chromium compounds, phosphorus-tungsten-molybdenum acid bronzes and carbon blacks (such as BLACK PEARLS 800 from Cabot). Colorants with special effects, such as metal oxide-coated mica pigments and metallic aluminum pigments, can also be used.

Particularly suitable colorants include those based on anthraquinone, on perinone, or on phthalocyanine, or those derived from such structures. Particularly preferred colorants are described in WO 2012/080395 A1. It is also possible to use the following as colorants: MACROLEX VIOLET 3R (CAS 61951-89-1; SOLVENT VIOLET 36), MACROLEX GREEN 5B (CAS 128-80-3; SOLVENT GREEN 3; C.I. 61565), AMAPLAST YELLOW GHS (CAS 13676-91-0; SOLVENT YELLOW 163; C:I: 58840), MACROLEX ORANGE 3G (CAS 6925-69-5; SOLVENT ORANGE 60; C.I. 564100), MACROLEX BLLTE RR (CAS 32724-62-2; SOLVENT BLLTE 97; C.I. 615290); KEYPLAST BLUE KR (CAS 116-75-6; SOLVENT BLUE 104; C.I. 61568), HELIOGEN BLUE types (e.g., HELIOGEN BLUE K 6911; CAS 147-14-8; PIGMENT BLUE 15:1; C.I. 74160), HELIOGEN GREEN types (e.g., HELIOGEN GREEN K 8730; CAS 1328-53-6; PIGMENT GREEN 7; C.I. 74260), and also MACROLEX GREEN G (CAS 28198-05-2; SOLVENT GREEN 28; C.I. 625580). If necessary, a filler can also be incorporated into the colorant composition.

Suitable fillers include, but are not limited to, carbonates, sulfates, silicates and oxides. For example, magnesium, calcium and barium carbonate, calcium and barium sulfate, silicates and aluminosilicates and aluminum, titanium, and silicon oxides are well suited. Mixtures of these compounds can also be used.

### EXAMPLES

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

The following materials were used in preparation of the thermoplastic compositions of the Examples:

| | | |
|---|---|---|
| PC-A | | a linear polycarbonate based on bisphenol A with a melt volume-flow rate MVR according to ISO 1133-1:2011 of 12 cm³/(10 min), measured at 300°C under a 1.2 kg load; |
| COPOLYMER A | | an acrylic impact modifier, commercially available from Kaneka Belgium NV as KANE ACE M-190; |
| SAN A | | styrene-acrylonitrile copolymer having a melt flow rate of 12 g/ 10 min. (230°C/3.8 kg load) per ASTM D 1238, commercially available from INEOS as LUSTRAN DN50; |
| RELEASE AGENT A | | a mold release agent which is a long-chain ester of pentaerythritol, available from Emery Oleochemicals as LOXIOL HOB-7119; |
| ANTIOXIDANT A | | octadecyl-3-[3,5-di-tert-butyl-4-hydroxyphenyl]propionate], a sterically hindered phenolic primary, commercially available from BASF as IRGANOX 1076; |
| STABILIZER A | | tris(2,4-di-tert-butylphenyl)phosphite, processing stabilizer, commercially available from Ciba Specialty Chemicals as IRGAFOS 168; |
| PIGMENT A | | a specialty carbon black pigment commercially available from Cabot Corp. as BLACK PEARLS 800; and |
| UV ABSORBER A | | phenol, 2, 2'-methylene-bis (6-(2H-benzotriazol-2-yl)-4-(1,1,3,3-tetramethylbutyl)), commercially available from BASF as TINUVIN 360. |

The blend of the present invention can be prepared by any method which makes it possible to produce a thoroughly mixed blend containing at least one of the thermoplastic polymers and other additives. The thermoplastic molding compositions of the invention can be prepared, for example, by mixing the respective components of the compositions in a known manner and melt-compounded at temperatures of preferably 200°C to 320°C, more preferably at 240°C to 310°C, most preferably at 260°C to 300°C in conventional aggregates such as internal kneaders, extruders and twin-shaft screws melt compounded and melt extruded. This process is referred to as compounding in the context of this application.

The mixing of the individual components of the compositions can be accomplished in a known manner both successively and simultaneously, both at about 20°C (room temperature) and at higher temperature. This means, for example, that some of the components can be dosed via the main feed of an extruder and the remaining components can later be fed via a side extruder in the compounding process.

**Table I**

| | **Ex. 1** | **Ex. 2** | **Ex. 3** | **Ex. 4** | **Ex. 5** | **Ex. 6** |
|---|---|---|---|---|---|---|
| **PC-A** | 15.85 | | | | 31.69 | |
| **RELEASE AGENT A** | 0.70 | 0.70 | 0.70 | 0.70 | 0.70 | 0.70 |
| **ANTIOXIDANT A** | 0.02 | 0.02 | 0.02 | 0.02 | 0.02 | 0.02 |
| **STABILIZER A** | 0.08 | 0.08 | 0.08 | 0.08 | 0.08 | 0.08 |
| **PIGMENT A** | 0.40 | 0.40 | 0.40 | 0.40 | 0.40 | 0.40 |
| **COPOLYMER A** | 15.85 | 95.07 | 31.69 | | 31.69 | 63.38 |
| **SAN A** | 63.37 | | 63.38 | 95.07 | 31.69 | 31.69 |
| **UV ABSORBER A** | 3.76 | 3.76 | 3.76 | 3.76 | 3.76 | 3.76 |
| **Total** | 100.03 | 100.03 | 100.03 | 100.03 | 100.03 | 100.03 |

| **Initial** | | | | | | |
|---|---|---|---|---|---|---|
| **L value** | 28.4 | 28.2 | 28.1 | 27.9 | 29.0 | 29.4 |
| **R/G** | 0.1 | 0.3 | 0.2 | -0.2 | -0.6 | -0.4 |
| **Reflectance** | 5.6 | 5.5 | 5.5 | 5.4 | 5.8 | 5.9 |
| **YI** | -5.8 | -3.7 | -4.0 | -7.1 | -3.8 | -4.2 |
| **Y/B** | -1.2 | -0.9 | -0.9 | -1.3 | -0.6 | -0.7 |
| **20** | 101 | 80 | 96 | 103 | 91 | 90 |
| **60** | 101 | 90 | 99 | 101 | 98 | 96 |
| **85** | 102 | 100 | 101 | 101 | 101 | 101 |

| **602 Joules** | | | | | | |
|---|---|---|---|---|---|---|
| **Delta E** | 0.5 | 20.0 | 0.4 | 0.2 | 0.2 | 0.3 |
| **Delta L** | -0.5 | 18.5 | -0.4 | -0.1 | -0.2 | -0.1 |
| **Delta Y Reflectance** | -0.2 | 10.3 | -0.1 | -0.1 | -0.1 | 0.0 |
| **Delta YI** | 0.9 | -27.7 | -1.0 | 0.3 | -0.1 | -1.2 |
| **Delta a** | 0.0 | -0.6 | -0.1 | 0.0 | -0.1 | -0.2 |
| **Delta b** | 0.2 | -7.5 | -0.2 | 0.1 | 0.0 | -0.2 |
| **20** | 83.3 | 0.3 | 77.2 | 99.0 | 76.2 | 63.5 |
| **Delta 20** | | | | | | |
| **60** | 94.8 | 1.5 | 91.6 | 99.8 | 92.4 | 82.7 |
| **Delta 60** | | | | | | |
| **85** | 100.1 | 12.2 | 100.3 | 99.4 | 100.4 | 98.4 |
| **Delta 85** | | | | | | |

| **1000 Joules** | | | | | | |
|---|---|---|---|---|---|---|
| **Delta E** | 1.55 | 17.02 | 1.36 | 3.3 | 1.21 | 0.83 |
| **Delta L** | -1.53 | 15.51 | -1.36 | -3.28 | -1.2 | -0.78 |
| **Delta Y Reflectance** | -0.56 | 8.1 | -0.49 | -1.13 | -0.45 | -0.3 |
| **Delta YI** | -1.01 | -26.76 | 0.22 | -2.42 | 0.89 | -1.61 |
| **Delta a** | -0.19 | -0.25 | -0.01 | -0.15 | 0.11 | -0.02 |
| **Delta b** | -0.08 | -7 | 0.07 | -0.28 | 0.16 | -0.3 |
| **20** | 15 | 0 | 26 | 7 | 22 | 27 |
| **Delta 20** | | | | | | |
| **60** | 54 | 1 | 56 | 14 | 53 | 53 |
| **Delta 60** | | | | | | |
| **85** | 95 | 15 | 93 | 82 | 85 | 81 |
| **Delta 85** | | | | | | |

| **1500 Joules** | | | | | | |
|---|---|---|---|---|---|---|
| **Delta E** | 3.06 | 17.98 | 1.68 | 5.92 | 1.19 | 1.14 |
| **Delta L** | -3.03 | 16.55 | -1.64 | -5.89 | -1.17 | -1.12 |
| **Delta Y Reflectance** | -1.07 | 8.83 | -0.59 | -1.9 | -0.44 | -0.43 |
| **Delta YI** | -2.58 | -26.49 | -2.15 | -5.17 | -0.6 | -0.93 |
| **Delta a** | -0.24 | -0.39 | -0.2 | -0.37 | 0.14 | 0.02 |
| **Delta b** | -0.31 | -7.02 | -0.31 | -0.55 | -0.15 | -0.17 |
| **20** | 1 | 0 | 7 | 4 | 16 | 20 |
| **Delta 20** | | | | | | |
| **60** | 25 | 1 | 40 | 7 | 51 | 46 |
| **Delta 60** | | | | | | |
| **85** | 87 | 10 | 88 | 65 | 81 | 59 |
| **Delta 85** | | | | | | |

| | **Ex. 7** | **Ex. 8** | **Ex. 9** | **Ex. 10** | **Ex. 11** | **Ex. 12** |
|---|---|---|---|---|---|---|
| **PC-A** | 63.38 | 31.69 | 63.37 | 31.69 | 63.38 | 95.07 |
| **RELEASE AGENT A** | 0.70 | 0.70 | 0.70 | 0.70 | 0.70 | 0.70 |
| **ANTIOXIDANT A** | 0.02 | p | 0.02 | 0.02 | 0.02 | 0.02 |
| **STABILIZER A** | 0.08 | 0.08 | 0.08 | 0.08 | 0.08 | 0.08 |
| **PIGMENT A** | 0.40 | 0.40 | 0.40 | 0.40 | 0.40 | 0.40 |
| **COPOLYMER A** | | | 15.85 | 31.69 | 31.69 | |
| **SAN A** | 31.69 | 63.38 | 15.85 | 31.69 | | |
| **UV ABSORBER A** | 3.76 | 3.76 | 3.76 | 3.76 | 3.76 | 3.76 |
| **Total** | 100.03 | 100.03 | 100.03 | 100.03 | 100.03 | 100.03 |

| **Initial** | | | | | | |
|---|---|---|---|---|---|---|
| **L value** | 27.9 | 27.9 | 28.8 | 29.0 | 29.9 | 27.9 |
| **R/G** | -0.2 | -0.2 | -0.6 | -0.6 | -0.8 | -0.2 |
| **Reflectance** | 5.4 | 5.4 | 5.7 | 5.8 | 6.1 | 5.4 |
| **YI** | -7.0 | -7.2 | -6.3 | -4.0 | -7.6 | -7.1 |
| **Y/B** | -1.3 | -1.4 | -1.1 | -0.6 | -1.3 | -1.3 |
| **20** | 104 | 66 | 99 | 90 | 94 | 108 |
| **60** | 103 | 95 | 101 | 98 | 99 | 105 |
| **85** | 102 | 99 | 102 | 101 | 102 | 103 |

| **602 Joules** | | | | | | |
|---|---|---|---|---|---|---|
| **Delta E** | 0.1 | 0.2 | 0.1 | 0.1 | 0.2 | 0.3 |
| **Delta L** | | | | | | |
| **Delta Y Reflectance** | 0.0 | 0.2 | 0.0 | 0.0 | 0.0 | 0.3 |
| **Delta YI** | 0.0 | 0.1 | 0.0 | 0.0 | 0.0 | 0.1 |
| **Delta a** | -0.3 | -0.4 | -0.3 | -0.4 | -0.7 | -0.9 |
| **Delta b** | 0.0 | 0.0 | -0.1 | -0.1 | -0.1 | 0.0 |
| **20** | -0.1 | -0.1 | 0.0 | -0.1 | -0.1 | -0.2 |
| **Delta 20** | 100.0 | 45.3 | 89.3 | 74.3 | 80.1 | 109.0 |
| **60** | | | | | | |
| **Delta 60** | 102.0 | 85.2 | 98.4 | 92.6 | 94.3 | 104.0 |
| **85** | | | | | | |
| **Delta 85** | 101.0 | 91.9 | 99.3 | 99.6 | 101.0 | 99.3 |
| **Delta E** | | | | | | |

| **1000 Joules** | | | | | | |
|---|---|---|---|---|---|---|
| **Delta E** | 0.92 | 0.79 | 1 | 1.12 | 1.21 | 0.2 |
| **Delta L** | -0.53 | -0.29 | -0.8 | -1.06 | -1.13 | 0.17 |
| **Delta Y Reflectance** | -0.19 | -0.11 | -0.3 | -0.4 | -0.45 | 0.06 |
| **Delta YI** | -4.09 | -4.12 | 2.76 | 1.76 | 1.87 | -0.26 |
| **Delta a** | -0.07 | -0.31 | -0.04 | 0.11 | -0.02 | 0.07 |
| **Delta b** | -0.75 | -0.67 | 0.59 | 0.33 | 0.43 | -0.08 |
| **20** | 69 | 22 | 28 | 25 | 23 | 90 |
| **Delta 20** | | | | | | |
| **60** | 89 | 64 | 64 | 58 | 55 | 100 |
| **Delta 60** | | | | | | |
| **85** | 101 | 94 | 94 | 80 | 85 | 100 |
| **Delta 85** | | | | | | |

| **1500 Joules** | | | | | | |
|---|---|---|---|---|---|---|
| **Delta E** | 2.5 | 2.53 | 0.76 | 0.94 | 1.29 | 3.21 |
| **Delta L** | -2.12 | -2.39 | -0.67 | -0.92 | -1.24 | -2.86 |
| **Delta Y Reflectance** | -0.75 | -0.84 | -0.26 | -0.35 | -0.49 | -0.99 |
| **Delta YI** | -7.96 | -5.19 | 1.74 | 0.19 | 1.51 | -8.09 |
| **Delta a** | -0.53 | -0.46 | 0.11 | 0.2 | -0.03 | 0.18 |
| **Delta b** | -1.2 | -0.71 | 0.32 | -0.02 | 0.36 | -1.44 |
| **20** | 36 | 8 | 17 | 16 | 19 | 44 |
| **Delta 20** | | | | | | |
| **60** | 61 | 30 | 60 | 52 | 51 | 70 |
| **Delta 60** | | | | | | |
| **85** | 96 | 84 | 96 | 74 | 81 | 98 |
| **Delta 85** | | | | | | |

| | **Ex. 13** | **Ex. 14** | **Ex. 15** | **Ex. 16** | | |
|---|---|---|---|---|---|---|
| **PC-A** | | 95.07 | | 31.69 | | |
| **RELEASE AGENT A** | 0.70 | 0.70 | 0.70 | 0.70 | | |
| **ANTIOXIDANT A** | 0.02 | 0.02 | 0.02 | 0.02 | | |
| **STABILIZER A** | 0.08 | 0.08 | 0.08 | 0.08 | | |
| **PIGMENT A** | 0.40 | 0.40 | 0.40 | 0.40 | | |
| **COPOLYMER A** | | | 95.07 | 63.38 | | |
| **SAN A** | 95.07 | | | | | |
| **UV ABSORBER A** | 3.76 | 3.76 | 3.76 | 3.76 | | |
| **Total** | 100.03 | 100.03 | 100.03 | 100.03 | | |

| **Initial** | | | | | | |
|---|---|---|---|---|---|---|
| **L value** | 27.8 | 27.9 | 27.9 | 30.5 | | |
| **R/G** | -0.2 | -0.2 | 0.1 | -0.7 | | |
| **Reflectance** | 5.3 | 5.4 | 5.4 | 6.4 | | |
| **YI** | -6.5 | -7.1 | -5.1 | -6.9 | | |
| **Y/B** | -1.2 | -1.4 | -1.1 | -1.2 | | |
| **20** | 101 | 108 | 36 | 72 | | |
| **60** | 100 | 104 | 81 | 88 | | |
| **85** | 101 | 102 | 96 | 99 | | |

| **602 Joules** | | | | | | |
|---|---|---|---|---|---|---|
| **Delta E** | 0.0 | 0.4 | 18.0 | 4.0 | | |
| **Delta L** | 0.0 | 0.4 | 16.8 | 3.4 | | |
| **Delta Y Reflectance** | 0.0 | 0.1 | 8.9 | 1.5 | | |
| **Delta YI** | -0.1 | -0.9 | -23.0 | -7.9 | | |
| **Delta a** | 0.0 | 0.0 | -0.1 | 0.4 | | |
| **Delta b** | 0.0 | -0.2 | -6.3 | -2.0 | | |
| **20** | 100.7 | 108.7 | 0.3 | 10.1 | | |
| **Delta 20** | | | | | | |
| **60** | 101.0 | 104.0 | 1.4 | 16.6 | | |
| **Delta 60** | | | | | | |
| **85** | 100.7 | 95.6 | 18.8 | 59.4 | | |
| **Delta 85** | | | | | | |

| **1000 Joules** | | | | | | |
|---|---|---|---|---|---|---|
| **Delta E** | 3.98 | 0.4 | 16.95 | 3.22 | | |
| **Delta L** | -3.97 | 0.29 | 15.82 | 2.09 | | |
| **Delta Y Reflectance** | -1.33 | 0.11 | 8.22 | 0.91 | | |
| **Delta YI** | -1.95 | -1.23 | -22.33 | -10.32 | | |
| **Delta a** | -0.01 | 0.05 | 0.02 | 0.38 | | |
| **Delta b** | -0.23 | -0.27 | -6.1 | -2.42 | | |
| **20** | 6 | 96 | 0 | 3 | | |
| **Delta 20** | | | | | | |
| **60** | 7 | 101 | 1 | 10 | | |
| **Delta 60** | | | | | | |
| **85** | 77 | 100 | 17 | 49 | | |
| **Delta 85** | | | | | | |

| 1500 **Joules** | | | | | | |
|---|---|---|---|---|---|---|
| **Delta E** | 6.13 | 3.15 | 17.75 | 3.72 | | |
| **Delta L** | -6.1 | -2.64 | 16.67 | 2.34 | | |
| **Delta Y Reflectance** | -1.95 | -0.92 | 8.81 | 1.02 | | |
| **Delta YI** | -5.18 | -9.7 | -22.1 | -12.67 | | |
| **Delta a** | -0.35 | 0.13 | -0.11 | 0.26 | | |
| **Delta b** | -0.55 | -1.72 | -6.1 | -2.88 | | |
| **20** | 4 | 53 | 0 | 1 | | |
| **Delta 20** | | | | | | |
| **60** | 6 | 76 | 1 | 5 | | |
| **Delta 60** | | | | | | |
| **85** | 56 | 99 | 11 | 36 | | |
| **Delta 85** | | | | | | |

Thermoplastic compositions were prepared from the components in the amounts provided in Table I according to Examples 1 to 14 and assessed for rheological, mechanical, and thermal properties as described below with the results presented in Table II.

### Rheological Properties

Melt viscosity was determined according to ISO 11443-A at 260°C; 1000s⁻¹. Melt volume rate (MVR) was determined at 260°C; 5 kg.

### Mechanical Properties

Flexural modulus, flexural stress, and flexural stress at 3.5 % strain were each determined at 2 mm/min according to ISO 178. Izod notched impact strength was determined at 23°C according to ISO 180/A. Izod notched break type was determined at 23°C according to ISO 180/A. Puncture maximum force was determined at 23°C; 4.4 m/s according to ISO 6603-2. Puncture energy was determined at 23°C; 4.4 m/s according to ISO 6603-2. Puncture break type was determined at 23°C; 4.4 m/s according to ISO 6603-2.

### Thermal Properties

Temperature of deflection under load was determined according to ISO 75-1 at 1.80 MPa.

### Accelerated Weathering

Each formulation was injection molded into flat color chips and conditioned for 40 hours, and the respective L*, a*, and b* color values were read on a X-RITE COLOR SPECTROMETER with D65-10 light source. The method chosen for Xenon weathering was SAE J2527 using the S-SUN XENOTEST CHAMBER Xe-3 made by Q-lab for total exposure of 4500kJ. The 60-degree gloss was measured with a BYK Micro-tri-gloss meter at each interval. The weathering and gloss results are summarized in Tables III and IV.

**Table II**

| **Property** | **Example Number** | | | | | | | |
|---|---|---|---|---|---|---|---|---|
| | **Ex. 1** | **Ex. 2** | **Ex. 3** | **Ex. 4** | **Ex. 5** | **Ex. 6** | **Ex. 7** | **Ex. 8** |
| **Melt viscosity (Pa·s)** | 127 | 205 | 131 | 93 | 174 | 163 | 197 | 125 |
| **MVR (cm³/10 min)** | 58 | 2 | 46 | 108 | 27 | 20 | 37 | 74 |
| **Flexural modulus (MPa)** | 2662 | 620 | 2202 | 3412 | 1988 | 1332 | 2922 | 3164 |
| **Flexural stress (MPa)** | 90 | 17 | 71 | 89 | 72 | 41.4 | 111.2 | 118.4 |
| **Flexural stress at 3.5% strain (MPa)** | 85 | 16 | 68 | | 65 | 39 | 95 | 105 |
| **Izod notched impact strength (kJ/m²)** | 4 | 15 | 5 | 2 | 21 | 11 | 6 | 3 |
| **Izod notched break type** | 100% Complete | 100% Partial | 100% Complete | 100% Complete | 100% Partial | 100% Complete | 100% Complete | 100% Complete |
| **Puncture maximum force (N)** | 2960 | 2197 | 3304 | 333 | 3657 | 2678 | 2722 | 380 |
| **Puncture energy (J)** | 9 | 22 | 14 | 1 | 35 | 23 | 9 | 0 |
| **Puncture break type** | 100% Six | 60% Two; 40% One | 100% Five | 100% Five | 60% Two; 20% Three; 20% Four | 60% Four; 40% Three | 80% Five; 20% Six | 100% Five |
| **Temperature of deflection under load (°C)** | 82 | 53 | 78 | 81 | 85 | 73 | 97 | 86 |

| **Ex. 9** | **Ex. 10** | **Ex. 11** | **Ex. 12** | **Ex. 13** | **Ex. 14** | **Ex. 15** | **Ex. 16** | |
|---|---|---|---|---|---|---|---|---|
| **Melt Viscosity (Pa·s)** | 221 | 168 | 295 | 528 | 96 | 601 | 210 | 233 |
| **MVR (cm³/10 min)** | 22 | 31 | 14 | 19 | 109 | 18 | 2 | 10 |
| **Flexural modulus (MPa)** | | | | | | | | |
| **Flexural stress (MPa)** | | | | | | | | |
| **Flexural stress at 3.5% strain (MPa)** | | | | | | | | |
| **Izod notched impact strength (kJ/m²)** | 73 | 20 | 59 | 6 | 1 | 7 | 14 | 40 |
| **Izod notched break type** | 100% Partial | 50% Complete; 40% hinge; 10% Partial | 100% Partial | 100% Complete | 100% Complete | 100% Complete | 100% Partial | 100% Partial |
| **Puncture maximum force (N)** | 4264 | 3630 | 3878 | 5126 | 320 | 5101 | 1987 | 2773 |
| **Puncture energy (J)** | 48 | 34 | 39 | 55 | 1 | 52 | 21 | 25 |
| **Puncture break type** | 60% Two; 40% One | 40% Four; 40% Two; 20% Three | 100% Two | 100% One | 100% Five | 100% One | 100% One | 100% Two |
| **Temperature of deflection under load (°C)** | | | | | | | | |

**Table III**

| **Hours** | **Delta E** | | | | | | | |
|---|---|---|---|---|---|---|---|---|
| | **Ex. 1** | **Ex. 2** | **Ex. 3** | **Ex. 4** | **Ex. 5** | **Ex. 6** | **Ex. 7** | **Ex. 8** |
| **0** | | | | | | | | |
| 602 | 0.54 | 20 | 0.43 | 0.16 | 0.17 | 0.26 | 0.07 | 0.24 |
| 1000 | 1.55 | 17.02 | 1.36 | 3.3 | 1.21 | 0.83 | 0.92 | 0.79 |
| 1500 | 3.06 | 17.98 | 1.68 | 5.92 | 1.19 | 1.14 | 2.5 | 2.53 |
| 2000 | 3.05 | 18.9 | 1.11 | 5.58 | 1.12 | 1.42 | 3.71 | 3.52 |
| 2500 | 3.28 | 19.15 | 0.87 | 7.25 | 0.95 | 1.75 | 4.07 | |
| 3500 | 5.64 | 18.76 | 1.62 | 7.21 | 2.08 | 0.5 | 4.61 | 5.63 |
| 4000 | 5.63 | 18.88 | 1.66 | 6.5 | 2.01 | 0.49 | 4.28 | 4.1 |
| 4500 | 5.3 | 18.91 | 1.59 | 6.69 | 1.97 | 0.5 | 4.18 | 3.21 |

| **Ex. 9** | **Ex. 10** | **Ex. 11** | **Ex. 12** | **Ex. 13** | **Ex. 14** | **Ex. 15** | **Ex. 16** | |
|---|---|---|---|---|---|---|---|---|
| 0 | | | | | | | | |
| 602 | 0.09 | 0.09 | 0.15 | 0.31 | 0.03 | 0.42 | 17.96 | 3.97 |
| 1000 | 1 | 1.12 | 1.21 | 0.2 | 3.98 | 0.4 | 16.95 | 3.22 |
| 1500 | 0.76 | 0.94 | 1.29 | 3.21 | 6.13 | 3.15 | 17.75 | 3.72 |
| 2000 | 0.83 | 1.04 | 1.33 | 4.02 | 6.18 | | 18.18 | 2.67 |
| 2500 | 0.76 | 0.88 | 1.06 | 3.7 | 6.97 | 3.62 | 18.3 | 2.01 |
| 3500 | 2.51 | 2.04 | 1.57 | 3.36 | 7.35 | 2.98 | 17.47 | 1.04 |
| 4000 | 2.85 | 1.89 | 1.58 | 3.21 | 6.79 | 2.89 | 17.63 | 0.88 |
| 4500 | 2.59 | 1.88 | 1.53 | 3.21 | 6.22 | 2.51 | 17.54 | 1.02 |

**Table IV**

| **Hours** | **60° gloss** | | | | | | | |
|---|---|---|---|---|---|---|---|---|
| | **Ex. 1** | **Ex. 2** | **Ex. 3** | **Ex. 4** | **Ex. 5** | **Ex. 6** | **Ex. 7** | **Ex. 8** |
| 0 | 101 | 90 | 99 | 101 | 98 | 96 | 103 | 95 |
| 602 | 95 | 1 | 92 | 100 | 92 | 82.733 | 102 | 85.167 |
| 1000 | 54 | 1 | 56 | 14 | 53 | 52.7 | 88.667 | 63.633 |
| 1500 | 25 | 1 | 40 | 7 | 51 | 45.5 | 60.833 | 29.9 |
| 2000 | 8 | 1 | 43 | 7 | 61 | 46 | 27 | 15 |
| 2500 | 3 | 1 | 46 | 4 | 65 | 51 | 18 | 11 |
| 3500 | 0.763 | 0.78 | 36.187 | 3.77 | 47.88 | 72.307 | 12.473 | 5.677 |
| 4000 | 0.7 | 0.77 | 35.073 | 4.673 | 45.21 | 72.433 | 13.363 | 6.74 |
| 4500 | 0.69 | 0.76 | 34.807 | 4.65 | 44.377 | 73.037 | 13.327 | 8.05 |
| 4500 after washing | 1.043 | 1.2 | 42.863 | 22.293 | 49.68 | 71.317 | 50.277 | 30.423 |
| % Gloss Retention | 1 | 1 | 43 | 22 | 51 | 74 | 49 | 32 |

| **Ex. 9** | **Ex. 10** | **Ex. 11** | **Ex. 12** | **Ex. 13** | **Ex. 14** | **Ex. 15** | **Ex. 16** | |
|---|---|---|---|---|---|---|---|---|
| 0 | 101 | 98 | 99 | 105 | 100 | 104 | 81 | 88 |
| 602 | 98.433 | 92.567 | 94.333 | 104 | 101 | 104 | 1.4 | 16.6 |
| 1000 | 63.867 | 58.1 | 55.167 | 99.633 | 7 | 101 | 1.1 | 9.833 |
| 1500 | 59.933 | 51.567 | 50.933 | 69.567 | 6.167 | 76 | 0.933 | 4.833 |
| 2000 | 41 | 54 | 58 | 39 | 6 | 47 | 1 | 4 |
| 2500 | 17 | 57 | 63 | 29 | 4 | 42 | 1 | 3 |
| 3500 | 2 | 36 | 48 | 19 | 4 | 32 | 1 | 3 |
| 4000 | 1.44 | 33.397 | 45.683 | 19.723 | 4.32 | 31.553 | 0.757 | 3.723 |
| 4500 | 1.397 | 32.803 | 44.903 | 19.533 | 5.573 | 33.113 | 0.753 | 3.303 |
| 4500 after washing | 2.033 | 37.4 | 50.087 | 55.55 | 41.047 | 75.857 | 1.21 | 4.773 |
| % Gloss Retention | 2 | 38 | 51 | 53 | 41 | 73 | 1 | 5 |

As can be appreciated by reference to the Tables, parts produced from the compositions of present invention (Examples 10 and 11) have exceptional weatherability and gloss retention. The inventive compositions are suitable for producing plastic parts, in particular, automobile parts.

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following numbered clauses:
Clause 1. A thermoplastic composition comprising: (A) 30 wt.% to 80 wt.%, preferably 30 wt.% to 65 wt.% of an aromatic polycarbonate or an aromatic polyester carbonate; blended with (B) 20 wt.% to 40 wt.%, preferably 25 wt.% to 35 wt.%, of an acrylonitrile-styrene-acrylate (ASA) copolymer; (C) 0 wt.% to 35 wt.%, preferably >0 wt.% to 32 wt.%, of a styrene-acrylonitrile (SAN) copolymer; (D) >0 wt.% to 4 wt.%, preferably 3.5 wt.% to 3.9 wt.% of a dimeric UV absorber; (E) 0.2 wt.% to 0.6 wt.%, preferably 0.2 wt.% to 0.5 wt.% of a mold release agent; and (F) 0.08 wt.% to 0.2 wt.%, preferably 0.1 wt.% to 0.2 wt.%, of an antioxidant, optionally, (G) one or more selected from the group consisting of colorants and fillers, wherein the thermoplastic composition has a Delta E ≤ 3 and a 60° gloss retention ≥ 50% after xenon weathering according to SAE J2527 at 4,500kJ and wherein the wt.%, all instances, are based on the weight of the thermoplastic composition.
Clause 2. The composition according to Clause 1, wherein the thermoplastic composition comprises 30 wt.% to 65 wt.% of an aromatic polycarbonate or an aromatic polyester carbonate.
Clause 3. The thermoplastic composition according to one of Clauses 1 and 2, wherein the thermoplastic composition comprises 25 wt.% to 35 wt.% of an acrylonitrile-styrene-acrylate (ASA) copolymer.
Clause 4. The thermoplastic composition according to any one of Clauses 1 to 3, wherein the thermoplastic composition comprises >0 wt.% to 32 wt.% of a styrene-acrylonitrile (SAN) copolymer.
Clause 5. The thermoplastic composition according to any one of Clauses 1 to 4, wherein the thermoplastic composition comprises 3.5 wt.% to 3.9 wt.% of a dimeric UV absorber.
Clause 6. The composition according to any one of Clauses 1 to 5, wherein the dimeric UV absorber is selected from the group consisting of 2-(3',5'-bis(1,1-dimethylbenzyl)-2'-hydroxyphenyl)benzotriazole, 2-(2'-hydroxy-5'-(tert-octyl)phenyl)benzotriazole, 2-(2'-hydroxy-3'-(2-butyl)-5'-(tert-butyl)phenyl)benzotriazole, bis(3-(2H-benzotriazolyl)-2-hydroxy-5-tert-octyl)methane, (2-(4,6-diphenyl-1,3,5-triazin-2-yl)-5-(hexyloxy)phenol, 2,4-dihydroxybenzophenone, 2-hydroxy-4-(octyloxy)benzophenone, cyano-3,3-diphenyl-2-propenoic acid, 2,2-bis[[(2-cyano-1-oxo-3,3-diphenyl-2-propenyl)oxy]methyl]-1,3-propanediyl ester, 2-[2-hydroxy-4-(2-ethylhexyl)oxy]phenyl-4,6-di(4-phenyl)phenyl-1,3,5-triazine, 2-(5-chloro-2H-benzotriazol-2-yl)-6-(1,1-dimethylethyl)-4-methylphenol, and tetraethyl 2,2'-(1,4-phenylenedimethylidene)bismalonate.
Clause 7. A plastic part comprising the thermoplastic composition according to any one of Clauses 1 to 6.
Clause 8. A process of producing the thermoplastic composition according to Clause 1, the process comprising blending: (A) 30 wt.% to 80 wt.%, preferably 30 wt.% to 65 wt.% of an aromatic polycarbonate or an aromatic polyester carbonate, with (B) 20 wt.% to 40 wt.%, preferably 25 wt.% to 35 wt.% of an acrylonitrile-styrene-acrylate (ASA) copolymer, (C) 0 wt.% to 35 wt.%, preferably >0 wt.% to 32 wt.% of a styrene-acrylonitrile (SAN) copolymer, (D) >0 wt.% to 4 wt.%, preferably 3.5 wt.% to 3.9 wt.% of a dimeric UV absorber, (E) 0.2 wt.% to 0.6 wt.%, preferably 0.2 wt.% to 0.5 wt.% of a mold release agent, (F) 0.08 wt.% to 0.2 wt.%, preferably 0.1 wt.% to 0.2 wt.%, of an antioxidant, optionally, (G) one or more selected from the group consisting of colorants, fillers, to produce a composition having a Delta E ≤ 3 and a 60° gloss retention ≥ 50% after xenon weathering according to SAE J2527 at 4,500kJ and wherein the wt.%, all instances, are based on the weight of the thermoplastic composition.
Clause 9. The process according to Clause 8, wherein the thermoplastic composition comprises 30 wt.% to 65 wt.% of an aromatic polycarbonate or an aromatic polyester carbonate.
Clause 10. The thermoplastic composition according to one of Clauses 8 and 9, wherein the thermoplastic composition comprises 25 wt.% to 35 wt.% of an acrylonitrile-styrene-acrylate (ASA) copolymer.
Clause 11. The thermoplastic composition according to any one of Clauses 8 to 10, wherein the thermoplastic composition comprises >0 wt.% to 32 wt.% of a styrene-acrylonitrile (SAN) copolymer.
Clause 12. The thermoplastic composition according to any one of Clauses 8 to 11, wherein the thermoplastic composition comprises 3.5 wt.% to 3.9 wt.% of a dimeric UV absorber.
Clause 13. The composition according to any one of Clauses 8 to 12, wherein the dimeric UV absorber is selected from the group consisting of 2-(3',5'-bis(1,1-dimethylbenzyl)-2'-hydroxyphenyl)benzotriazole, 2-(2'-hydroxy-5'-(tert-octyl)phenyl)benzotriazole, 2-(2'-hydroxy-3 '-(2-butyl)-5 '-(tert-butyl)phenyl)benzotriazole, bis(3-(2H-benzotriazolyl)-2-hydroxy-5-tert-octyl)methane, (2-(4,6-diphenyl-1,3,5-triazin-2-yl)-5-(hexyloxy)phenol, 2,4-dihydroxybenzophenone, 2-hydroxy-4-(octyloxy)benzophenone, cyano-3,3-diphenyl-2-propenoic acid, 2,2-bis[[(2-cyano-1-oxo-3,3-diphenyl-2-propenyl)oxy]methyl]-1,3-propanediyl ester, 2-[2-hydroxy-4-(2-ethylhexyl)oxy]phenyl-4,6-di(4-phenyl)phenyl-1,3,5-triazine, 2-(5-chloro-2H-benzotriazol-2-yl)-6-(1,1-dimethylethyl)-4-methylphenol, and tetraethyl 2,2'-(1,4-phenylenedimethylidene)bismalonate.
Clause 14. A plastic part comprising the thermoplastic composition produced by the process according to Clause 8.
Clause 15. An automobile part comprising the plastic part according to one of Clauses 7 and 14.

## Claims

1. A thermoplastic composition comprising:
(A) 30 wt.% to 80 wt.%, preferably 30 wt.% to 65 wt.% of an aromatic polycarbonate or an aromatic polyester carbonate; blended with
(B) 20 wt.% to 40 wt.%, preferably 25 wt.% to 35 wt.%, of an acrylonitrile-styrene-acrylate (ASA) copolymer;
(C) 0 wt.% to 35 wt.%, preferably >0 wt.% to 32 wt.%, of a styrene-acrylonitrile (SAN) copolymer;
(D) >0 wt.% to 4 wt.%, preferably 3.5 wt.% to 3.9 wt.% of a dimeric UV absorber;
(E) 0.2 wt.% to 0.6 wt.%, preferably 0.2 wt.% to 0.5 wt.% of a mold release agent; and
(F) 0.08 wt.% to 0.2 wt.%, preferably 0.1 wt.% to 0.2 wt.%, of an antioxidant, optionally,
(G) one or more selected from the group consisting of colorants and fillers,
wherein the thermoplastic composition has a Delta E ≤ 3 and a 60° gloss retention ≥ 50% after xenon weathering according to SAE J2527 at 4,500kJ and wherein the wt.%, all instances, are based on the weight of the thermoplastic composition.

2. The composition according to claim 1, wherein the thermoplastic composition comprises 30 wt.% to 65 wt.% of an aromatic polycarbonate or an aromatic polyester carbonate.

3. The thermoplastic composition according to one of claims 1 and 2, wherein the thermoplastic composition comprises 25 wt.% to 35 wt.% of an acrylonitrile-styrene-acrylate (ASA) copolymer.

4. The thermoplastic composition according to any one of claims 1 to 3, wherein the thermoplastic composition comprises >0 wt.% to 32 wt.% of a styrene-acrylonitrile (SAN) copolymer.

5. The thermoplastic composition according to any one of claims 1 to 4, wherein the thermoplastic composition comprises 3.5 wt.% to 3.9 wt.% of a dimeric UV absorber.

6. The composition according to any one of claims 1 to 5, wherein the dimeric UV absorber is selected from the group consisting of 2-(3',5'-bis(1,1-dimethylbenzyl)-2'-hydroxyphenyl)benzotriazole, 2-(2'-hydroxy-5'-(tert-octyl)phenyl)benzotriazole, 2-(2'-hydroxy-3'-(2-butyl)-5'-(tert-butyl)phenyl)benzotriazole, bis(3-(2H-benzotriazolyl)-2-hydroxy-5-tert-octyl)methane, (2-(4,6-diphenyl-1,3,5-triazin-2-yl)-5-(hexyloxy)phenol, 2,4-dihydroxybenzophenone, 2-hydroxy-4-(octyloxy)benzophenone, cyano-3,3-diphenyl-2-propenoic acid, 2,2-bis[[(2-cyano-1-oxo-3,3-diphenyl-2-propenyl)oxy]methyl]-1,3-propanediyl ester, 2-[2-hydroxy-4-(2-ethylhexyl)oxy]phenyl-4,6-di(4-phenyl)phenyl-1,3,5-triazine, 2-(5-chloro-2H-benzotriazol-2-yl)-6-(1,1-dimethylethyl)-4-methylphenol, and tetraethyl 2,2'-(1,4-phenylenedimethylidene)bismalonate.

7. A plastic part comprising the thermoplastic composition according to any one of Clauses 1 to 6.

8. A process of producing the thermoplastic composition according to claim 1, the process comprising blending: (A) 30 wt.% to 80 wt.%, preferably 30 wt.% to 65 wt.% of an aromatic polycarbonate or an aromatic polyester carbonate, with (B) 20 wt.% to 40 wt.%, preferably 25 wt.% to 35 wt.% of an acrylonitrile-styrene-acrylate (ASA) copolymer, (C) 0 wt.% to 35 wt.%, preferably >0 wt.% to 32 wt.% of a styrene-acrylonitrile (SAN) copolymer, (D) >0 wt.% to 4 wt.%, preferably 3.5 wt.% to 3.9 wt.% of a dimeric UV absorber, (E) 0.2 wt.% to 0.6 wt.%, preferably 0.2 wt.% to 0.5 wt.% of a mold release agent, (F) 0.08 wt.% to 0.2 wt.%, preferably 0.1 wt.% to 0.2 wt.%, of an antioxidant, optionally, (G) one or more selected from the group consisting of colorants, fillers, to produce a composition having a Delta E ≤ 3 and a 60° gloss retention ≥ 50% after xenon weathering according to SAE J2527 at 4,500kJ and wherein the wt.%, all instances, are based on the weight of the thermoplastic composition.

9. The process according to claim 8, wherein the thermoplastic composition comprises 30 wt.% to 65 wt.% of an aromatic polycarbonate or an aromatic polyester carbonate.

10. The thermoplastic composition according to one of claims 8 and 9, wherein the thermoplastic composition comprises 25 wt.% to 35 wt.% of an acrylonitrile-styrene-acrylate (ASA) copolymer.

11. The thermoplastic composition according to any one of claims 8 to 10, wherein the thermoplastic composition comprises >0 wt.% to 32 wt.% of a styrene-acrylonitrile (SAN) copolymer.

12. The thermoplastic composition according to any one of claims 8 to 11, wherein the thermoplastic composition comprises 3.5 wt.% to 3.9 wt.% of a dimeric UV absorber.

13. The composition according to any one of claims 8 to 12, wherein the dimeric UV absorber is selected from the group consisting of 2-(3',5'-bis(1,1-dimethylbenzyl)-2'-hydroxyphenyl)benzotriazole, 2-(2'-hydroxy-5'-(tert-octyl)phenyl)benzotriazole, 2-(2'-hydroxy-3'-(2-butyl)-5'-(tert-butyl)phenyl)benzotriazole, bis(3-(2H-benzotriazolyl)-2-hydroxy-5-tert-octyl)methane, (2-(4,6-diphenyl-1,3,5-triazin-2-yl)-5-(hexyloxy)phenol, 2,4-dihydroxybenzophenone, 2-hydroxy-4-(octyloxy)benzophenone, cyano-3,3-diphenyl-2-propenoic acid, 2,2-bis[[(2-cyano-1-oxo-3,3-diphenyl-2-propenyl)oxy]methyl]-1,3-propanediyl ester, 2-[2-hydroxy-4-(2-ethylhexyl)oxy]phenyl-4,6-di(4-phenyl)phenyl-1,3,5-triazine, 2-(5-chloro-2H-benzotriazol-2-yl)-6-(1,1-dimethylethyl)-4-methylphenol, and tetraethyl 2,2'-(1,4-phenylenedimethylidene)bismalonate.

14. A plastic part comprising the thermoplastic composition produced by the process according to claim 8.

15. An automobile part comprising the plastic part according to one of claims 7 and 14.
